(19) Europäisches Patentamt
European Patent Office
Office européen des brevets

(11) **EP 2 402 730 A1**

(12) **EUROPÄISCHE PATENTANMELDUNG**

(43) Veröffentlichungstag:
**04.01.2012 Patentblatt 2012/01**

(51) Int Cl.:
***G01L 1/22*** *(2006.01)*     ***F16C 17/12*** *(2006.01)*

(21) Anmeldenummer: **11005183.6**

(22) Anmeldetag: **27.06.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **29.06.2010 DE 102010025523**

(71) Anmelder: **Voith Patent GmbH
89522 Heidenheim (DE)**

(72) Erfinder: **Grawenhof, Peter
89547 Dettlingen (DE)**

(74) Vertreter: **Schmidt, Sven Hendrik
Dr. Weitzel & Partner
Friedenstraße 10
89522 Heidenheim (DE)**

(54) **Kraftaufnehmer mit Biegebalken mit kontinuierlicher Verjüngung**

(57) Die Erfindung betrifft einen Kraftaufnehmer
- mit einem ersten Anschlusspunkt und einem zweiten Anschlusspunkt, die über einen elastischen Federkörper miteinander verbunden sind und durch Krafteinleitung an wenigstens einem der beiden Anschlusspunkte bei Verformung des Federkörpers relativ zueinander bewegbar sind; wobei
- der Federkörper zumindest teilweise durch eine Biegebalken gebildet wird, der entlang seiner Längsachse von einer Einspannstelle zu einem Balkenende verläuft und der sich unter der Krafteinleitung quer zu seiner Längsachse biegt;
- mit einem an wenigstens einer Oberfläche des Biegebalkens angeschlossenen Sensor, welcher die Verformung des Biegebalkens zumindest über einem Verformungsabschnitt, der sich in Richtung der Längsachse erstreckt, erfasst.

Die Erfindung ist dadurch gekennzeichnet, dass
- die Höhe und/oder die Breite des Biegebalkens in Richtung von der Einspannstelle zu dem Balkenende zumindest über dem Verformungsabschnitt kontinuierlich verjüngt ausgeführt ist, wobei die Höhe in Biegerichtung und die Breite senkrecht oder winklig zur Biegerichtung verläuft.

EP 2 402 730 A1

**Beschreibung**

Die vorliegende Erfindung betrifft einen Kraftaufnehmer, mittels welchem Kräfte und/oder Momente, die über ein Bauteil, beispielsweise eine Gelenkwelle, insbesondere Kreuzgelenkwelle, übertragen werden, erfasst werden können, im Einzelnen mit den Merkmalen gemäß dem Oberbegriff von Anspruch 1.

Kraftaufnehmer werden beispielsweise in Antriebssträngen dort eingesetzt, wo mittels eines Bauteils eine Kraft- oder ein Drehmoment übertragen wird und die aktuell übertragene Kraft beziehungsweise das aktuell übertragene Drehmoment zum Zwecke einer Regelung oder einer Überwachung erfasst werden soll. Dabei soll im Sinne einer exakten Regelung beziehungsweise zuverlässigen Überwachung die durch den Kraftaufnehmer erfasste Kraft beziehungsweise das erfasste Moment möglichst exakt der tatsächlich mittels des Bauteils übertragenen Kraft beziehungsweise dem tatsächlich übertragenen Moment entsprechen, was besonders dann problematisch ist, wenn die übertragene Kraft beziehungsweise das übertragene Moment hinsichtlich des Betrages stark variiert.

Kraftaufnehmer der gattungsgemäßen Art weisen einen ersten Anschlusspunkt und einen zweiten Anschlusspunkt auf, die über einen elastischen Federkörper miteinander verbunden sind und durch Krafteinleitung an wenigstens einem der beiden Anschlusspunkte bei Verformung des Federkörpers relativ zueinander bewegbar sind. Diese Bewegung kann beispielsweise dadurch erfolgen, dass einer der beiden Anschlusspunkte festgehalten beziehungsweise eingespannt wird und der andere Anschlusspunkt mit der zu erfassenden Kraft beziehungsweise dem zu erfassenden Moment beaufschlagt wird, sodass er sich gegenüber dem festgehaltenen Anschlusspunkt bewegt und dabei den elastischen Federkörper verformt. Selbstverständlich ist es auch möglich, beide Anschlusspunkte jeweils mit einer Kraft oder einem Drehmoment zu beaufschlagen, sodass die Relativbewegung zwischen den Anschlusspunkten, welche die Verformung des elastischen Federkörpers bewirkt, erfolgt.

Der Federkörper wird zumindest teilweise durch einen Biegebalken gebildet, der entlang seiner Längsachse von einer Einspannstelle zu einem Balkenende verläuft und der sich unter der Krafteinleitung quer zu seiner Längsachse biegt. Im Folgenden wird unter Krafteinleitung auch die zuvor dargestellte Momenteneinleitung beziehungsweise eine Krafteinleitung, die aus der Momenteneinleitung an wenigstes einem Anschlusspunkt des Kraftaufnehmers resultiert, verstanden.

Die Verbiegung des Biegebalkens kann an wenigstens einer Oberfläche des Biegebalkens mittels eines an der Oberfläche angeschlossenen Sensors (zum Beispiel den Dehnmessstreifen) des Kraftaufnehmers erfasst werden und aus dieser Verformung die Kraft bestimmt werden. Dabei wird insbesondere nicht die Verformung des Biegebalkens über seiner gesamten Längsachse erfasst, sondern es reicht in der Regel aus, wenn die Verformung des Biegebalkens über einem axialen Abschnitt desselben, vorliegend als Verformungsabschnitt bezeichnet, erfasst wird.

Obwohl die bekannten Kraftaufnehmer bereits in verschiedensten Einsatzgebieten sehr zahlreich eingesetzt werden, treten immer wieder Schwachstellen bei der Kraft- beziehungsweise Drehmomenterfassung im Hinblick auf die Erfassungsgenauigkeit auf, besonders bei den genannten in ihrem Betrag stark varlierenden Kräften und/oder Momenten, wenn diese durch ein- und denselben Kraftaufnehmer erfasst werden sollen.

Der vorliegenden Erfindung liegt die Aufgabe zugrunde, einen Kraftaufnehmer der eingangs beschriebenen Art derart weiterzuentwickeln, dass die Erfassungsgenauigkeit verbessert wird, wobei der Kraftaufnehmer insbesondere auch zur Erfassung besonders großer Kräfte und/oder Momente geeignet sein soll. Ferner soll der Kraftaufnehmer robust und kostengünstig in der Herstellung ausgeführt sein.

Die erfindungsgemäße Aufgabe wird durch einen Kraftaufnehmer mit den Merkmalen von Anspruch 1 gelöst. In den abhängigen Ansprüchen sind vorteilhafte und besonders zweckmäßige Ausgestaltungen der Erfindung angegeben.

Der erfindungsgemäße Kraftaufnehmer weist neben den zuvor beschriebenen gattungsgemäßen Merkmalen eine besondere Gestaltung des Querschnitts des Biegebalkens in Richtung von der Einspannstelle zu dem Balkenende zumindest Ober dem Verformungsabschnitt auf, welche die im Biegebalken auftretende Biegespannung und/oder die Oberflächendehnungen über diesem axialen Abschnitt beziehungsweise über der gesamten Länge des Biegebalkens vergleichmäßigt und so eine exaktere Erfassung der Verformung des Biegebalkens mittels des Sensors bewirkt. Erfindungsgemäß verjüngt sich nämlich der Querschnitt des Biegebalkens, indem die Höhe und/oder die Breite in Richtung von der Einspannstelle zu dem Balkenende über dem gesamten Biegebalken oder zumindest über dem Verformungsabschnitt kontinuierlich abnimmt. Die Höhe des Biegebalkens ist dabei durch die Biegerichtung definiert und die Breite des Biegebalkens verläuft senkrecht (oder winklig) zur Biegerichtung.

Unter Einspannstelle des Biegebalkens ist nicht zwingend ein axiales Ende des Federkörpers zu verstehen, sondern entscheidend ist nur, dass das Balkenende, welches ebenfalls nicht zwingend das zweite axiale Ende des Federkörpers ausbilden muss, durch die Krafteinleitung in den Kraftaufnehmer relativ zu der Einspannstelle des Biegebalkens in Richtung der Höhe des Biegebalkens verlagert wird. Gemäß einer Ausführungsform fällt jedoch die Einspannstelle mit dem ersten axialen Ende des elastischen Federkörpers, insbesondere an dem ersten Anschlusspunkt, zusammen, und ferner kann das Balkenende gemäß einer Ausführungsform mit dem zweiten axialen Ende des elastischen Federkörpers und insbesondere mit dem zweiten Anschlusspunkt zusammenfallen.

Der Biegebalken kann vorteilhaft ein Höhenprofil aufweisen, das in einer Ebene senkrecht zu der Längsachse einen Rechteckquerschnitt aufweist. Selbstverständlich sind andere Querschnittsformen denkbar, beispielsweise ein kreisförmiger oder ovaler Querschnitt. Ferner sind andere eckige Querschnittsformen denkbar, beispielsweise eine dreieckige Querschnittsform oder eine andere Polygon-Querschnittsform. Auch ist es möglich, dass der Biegebalken oder ein Teilbereich desselben aus mehreren Einzelkörpern, beispielsweise aufeinander gestapelten Blattfedern mit einem entsprechenden Querschnitt oder auch anderem Querschnitt, zusammengesetzt ist.

Gemäß einer ersten Ausführungsform ist die Höhe des Biegebalkens von der Einspannstelle bis zu dem Balkenende oder zumindest in Richtung von der Einspannstelle zu dem Balkenende über dem Verformungsabschnitt konstant, und die Breite nimmt linear ab, insbesondere gemäß der Formel:

$$b_x = b_{max} \cdot l_x / l$$

mit

$b_x$: Breite an der Axialposition x

$b_{max}$: Maximale Breite des Biegebalkens im betreffenden Abschnitt

$l_x$: Abstand vom axialen Ende des betreffenden Abschnittes in Richtung von der Einspannstelle zu dem Balkenende gesehen

$l$: Axiale Länge des betreffenden Abschnittes.

Mit "betreffender Abschnitt" ist entweder die gesamte axiale Erstreckung des Biegebalkens von der Einspannstelle bis zu dem Balkenende gemeint, wenn nämlich die Breite über der gesamten axialen Erstreckung linear abnimmt, oder die axiale Erstreckung des Verformungsabschnittes.

Bei einer solchen linearen Abnahme der Breite kann der Biegebalken in dem betreffenden Abschnitt beispielsweise eine Dreiecksform in einer Draufsicht in Richtung der Höhe aufweisen, mit einem spitzen Ende, das dem Balkenende zugewandt ist oder dieses ausbildet.

Eine alternative Ausführungsform sieht vor, dass die Breite des Biegebalkens in dem entsprechenden Abschnitt, das heißt von der Einspannstelle bis zu dem Balkenende oder in Richtung von der Einspannstelle zu dem Balkenende über dem Verformungsabschnitt konstant ist und die Höhe nach einer Parabel, insbesondere nach einer quadratischen Parabel, abnimmt, vorteilhaft gemäß der Formel

$$h_x = h_{max} \sqrt{(l_x / l)}$$

mit

$h_x$: Höhe an der Axialposition x

$h_{max}$: Maximale Höhe des Biegebalkens im betreffenden Abschnitt

$l_x$: Abstand vom axialen Ende des betreffenden Abschnittes in Richtung von der Einspannstelle zu dem Balkenende gesehen

$l$: Axiale Länge des betreffenden Abschnittes.

Die beschriebene Abnahme der Höhe nach einer Parabel kann gemäß einer ersten Ausführungsform durch eine einseitige Anformung erreicht werden, sodass der Biegebalken an einer Oberfläche senkrecht zur Höhe, insbesondere an seiner oberen Oberfläche, eben ausgeführt ist und an seiner entgegengesetzten Oberfläche, insbesondere der unteren Oberfläche, einen bogenförmigen beziehungsweise parabelförmigen Verlauf aufweist.

Im Hinblick auf eine optimale Vergleichmäßigung der Biegespannungsverteilung im Biegebalken über der axialen Länge stellt die parabelförmige Abnahme der Höhe bei konstanter Breite, insbesondere gemäß der quadratischen Parabel, ein Optimum dar. Eine solche Parabelform lässt sich in Zeichnungen jedoch nur schwer definieren und erfordert einen höheren Programmierungsaufwand der Werkzeugmaschinen in der Herstellung. Erfindungsgemäß kann nun gemäß einer alternativen Ausführungsform eine Gestaltung des Querschnittsverlaufs des Biegebalkens bei konstanter Breite erzielt werden, die wesentlich einfacher herstellbar ist und zugleich annähernd dasselbe Ergebnis bei der gleichmäßigen Verteilung der Biegespannung über der Längsachse erzielt. Gemäß dieser Ausführungsform weist der Biegebalken in einem Axialschnitt senkrecht zur Breite ein Querschnittsprofil auf, das durch zwei sich gegenüberstehende Kreisbögen, insbesondere mit identischem Radius, begrenzt wird. Um die kontinuierlich abnehmende Höhe zu erzielen, laufen die Kreisbögen entlang der Längsachse des Biegebalkens in Richtung zum Balkenende aufeinander zu.

Der Sensor, mittels welchem die Verformung des Biegebalkens zumindest in dem Verformungsabschnitt erfasst wird, umfasst vorteilhaft einen Dehnungsmessstreifen oder eine Vielzahl von Dehnungsmessstreifen, welche insbesondere zu einer Wheatstone'schen Brücke zusammengeschaltet sind. Selbstverständlich kommen andere Sensoren in Betracht. Nur beispielsweise sei ein piezoelektrischer Sensor genannt. Ein solcher piezoelektrischer Sensor kann beispielsweise auch in den Biegebalken integriert werden.

Es kann ausreichen, wenn nur eine Oberfläche des Biegebalkens an dem Sensor angeschlossen ist beziehungsweise einen solchen trägt. Günstig ist es jedoch, wenn zwei einander entgegengesetzte Oberflächen jeweils mit einem entsprechenden Sensor versehen sind, entweder einen solchen Sensor tragen oder an einem solchen Sensor angeschlossen sind, wobei die erste Oberfläche vorteilhaft die obere Oberfläche und die zweite Oberfläche die untere Oberfläche des Biegebalkens ist, bezogen auf die Richtung der Höhe. Hierdurch können die Messwerte beider Sensoren betragsgemäßig gemittelt werden. Kommt es dabei zu einer größeren Differenz beider Messwerte, kann auf eine Fehlfunktion in der Messelektronik geschlossen werden.

Die Erfindung soll nachfolgend anhand der Figuren exemplarisch beschrieben werden.

Es zeigen:

Figur 1        eine schematische Darstellung eines erfindungsgemäß ausgeführten Kraftaufnehmers in einer seitlichen Ansicht;

Fig. 2a — 2g   verschiedene mögliche beispielhafte Querschnittsgestaltungen des Biegebalkens in jeweils einer schematischen Ansicht.

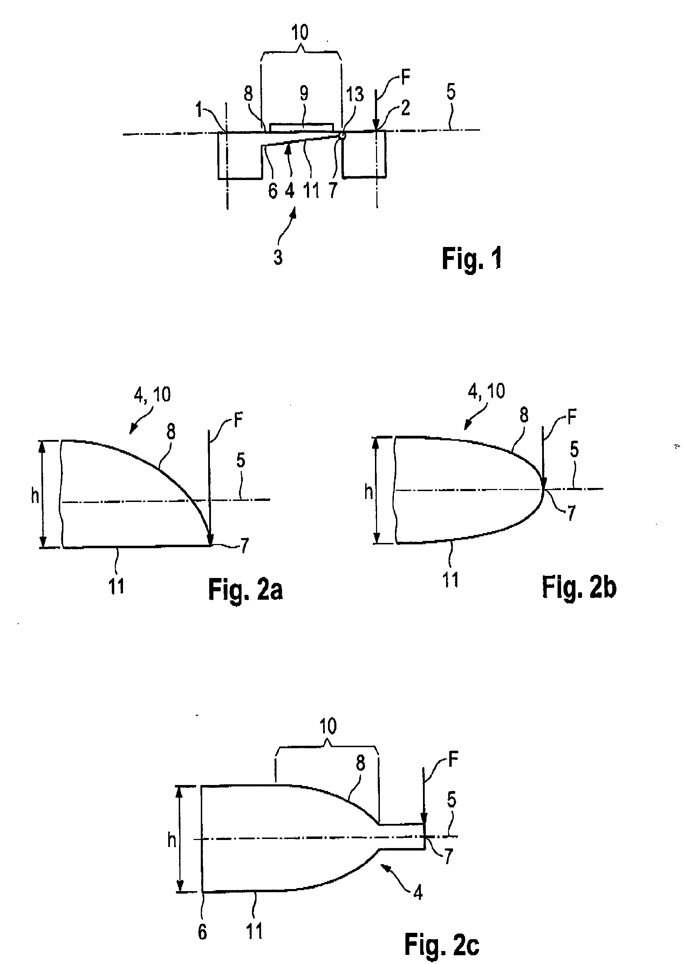

In der Figur 1 erkennt man einen erfindungsgemäß ausgeführten Kraftaufnehmer mit einem ersten Anschlusspunkt 1 und einem zweiten Anschlusspunkt 2, die über den elastischen Federkörper 3 miteinander verbunden sind und durch Krafteinleitung an wenigstens einem der beiden Anschlusspunkte 1, 2 bei einer Verformung des Federkörpers 3 relativ zueinander bewegbar sind. Der Federkörper 3 weist im gezeigten Ausführungsbeispiel zwei starre Endbereiche auf, von denen der erste den ersten Anschlusspunkt 1 bildet und der zweite den zweiten Anschlusspunkt 2 bildet. Vorliegend sind diese starren Endbereiche in einer seitlichen Ansicht annähernd quadratisch. Selbstverständlich kommen auch andere Formen in Betracht.

Die beiden starren Endbereiche des Federkörpers 3 sind über einen Biegebalken 4 miteinander verbunden. Demnach besteht in der gezeigten Ausführungsform der Federkörper 3 allen aus zwei endseitigen starren Bereichen und dem zwischengeordneten biegeelastischen Biegebalken 4.

Der Biegebalken 4 erstreckt sich entlang seiner Längsachse 5 von einer Einspannstelle 6, die das erste axiale Ende des Biegebalkens 4 ausbildet, zu einem Balkenende 7, das das zweite dem ersten Ende entgegengesetzten Ende des Biegebalkens 4 ausbildet. Demnach schließt sich die Einspannstelle 6 in Axialrichtung des Federkörpers 3 an den starren Endbereich mit dem ersten Anschlusspunkt 1 an, und der zweite starre Endbereich mit dem zweiten Anschlusspunkt 2 schließt sich an das Balkenende 7 an. An der Einspannstelle 6 ist der Biegebalken 4 starr an dem Endbereich angeschlossen, welcher den ersten Anschlusspunkt 1 bildet An dem Balkenende 7 ist der Biegebalken 4 gelenkig an dem starren Endbereich angeschlossen, welcher den zweiten Anschlusspunkt 2 bildet. Der gelenkige Anschluss kann dabei durch ein verdrehbares Gelenk 13 oder Scharnier, auch Filmscharnier, ausgeführt sein. Zusätzlich oder alternativ kann das Gelenk funktionell auch durch die Formgebung des Anschlusses des Biegebalkens 4 an dem Endbereich oder die Werkstoffauswahl in diesem Bereich gebildet werden, beispielsweise mittels einer Verjüngung, die eine gelenkartige Verbiegung in dem Bereich zulässt.

Obwohl in dem in der Figur 1 gezeigten Ausführungsbeispiel der Biegebalken 4 von seinem ersten axialen Ende bis zu seinem zweiten axialen Ende in Richtung der Längsachse 5 insgesamt einen sich kontinuierlich verjüngenden Querschnitt aufweist, kommt es entscheidend auf die Querschnittsveränderung des Verformungsabschnittes 10 an, der sich nur über einen Teilbereich der axialen Länge des Biegebalkens 4 erstreckt. Entlang des gesamten Verformungsabschnittes 10 wird nämlich mittels eines Sensors 9, der beispielsweise einen oder eine Vielzahl von Dehnungsmessstreifen (DMS) aufweist, die Verformung des Biegebalkens 4 in diesem Verformungsabschnitt 10 erfasst, wenn sich der zweite Anschlusspunkt 2 relativ zu dem ersten Anschlusspunkt 1 oder umgekehrt bewegt und dadurch der Biegebalken 4 gebogen wird. Zur Vergleichmäßigung der dabei im Verformungsabschnitt 10 auftretenden Biegespannung weist der Biegebalken 4 in Richtung der Längsachse 5 im gesamten Verformungsabschnitt 10 eine kontinuierliche Querschnittsverminderung auf, betrachtet in Richtung von der Einspannstelle 6 zu dem Balkenende 7. Diese Vergleichmäßigung im gesamten Bereich, welchen der Sensor 9 abgreift, führt zu einer wesentlich exakteren Verformungserfassung und damit Kraftaufnahme. Insbesondere kann damit einer vorgegebenen Verformung am Biegebalken 4 ein konstanter Spannungswert am DMS und damit ein definierter Drehmomentwert zugewiesen werden.

Unter einer kontinuierlichen Verjüngung der Höhe und/oder der Breite des Biegebalkens im Sinne der vorliegenden Erfindung wird sowohl eine stetige Verjüngung als auch eine Verjüngung mit Sprungstellen verstanden. Entscheidend ist nur, dass in dem Bereich, den der Sensor 9 abgreift, vom axialen Anfang bis zum axialen Ende keine Querschnittsvergrößerung, insbesondere keine Vergrößerung der Höhe oder der Breite auftritt.

Bei dem in der Figur 1 gezeigten Ausführungsbeispiel ist der Sensor 9 auf nur eine Oberfläche 8 des Biegebalkens 4 aufgebracht, nämlich vorliegend auf die obere Oberfläche, die sich bei der Biegung des Biegebalkens 4 verlängert (beziehungsweise bei einer entgegengesetzten relativen Verlagerung der beiden Anschlusspunkte 1, 2 verkürzt). Zusätzlich oder alternativ könnte ein Sensor 9 auch auf der entgegengesetzten Oberfläche 11 positioniert sein, welche im Vergleich zu der ersten Oberfläche 8 betragsmäßig gleichen, aber entgegengesetzten Verformungen unterliegt. Bei einer anderen Gestaltung des Sensors 9 könnte dieser zusätzlich oder alternativ auch seitlich am Biegebalken 4 ent-

In den Figuren 2a bis 2g sind mögliche Gestaltungen des Verformungsabschnittes 10 des Biegebalkens 4 gezeigt. Selbstverständlich könnte auch der gesamte Biegebalken 4 die gezeigte Kontur aufweisen. Zum besseren Verständnis ist beispielhaft die die Verformung des Biegebalkens 4 bewirkende Kraft F eingetragen, sowie die Richtung der Höhe h als auch der Breite b des Biegebalkens 4.

Gemäß der Figur 2a weist der Biegebalken 4 zumindest im Verformungsabschnitt 10 eine konstante Breite auf, sowie eine Höhe, die In Richtung der Längsachse 5 bogenförmig, beispielsweise parabelförmig vermindert ist. Die Darstellung ist dabei als Prinzipskizze zu verstehen, da nicht zwingend, jedoch in der Regel der Biegebalken 4 am Balkenende 7 eine gewisse Höhe als Übergangsbereich zum zweiten Anschlusspunkt (nicht dargesteilt) aufweisen wird. Entsprechendes gilt für die weiteren Figuren.

Während gemäß der Figur 2a die untere Oberfläche 11 des Biegebalkens 4 beziehungsweise des Verformungsabschnittes 10 eben ist und nur die obere Oberfläche 8 verjüngt bogenförmig ausgeführt ist, verjüngen sich gemäß der Ausführungsform in der Figur 2b beide Oberflächen 8, 11. Auch bei der Ausführungsform gemäß der Figur 2b folgen die sich verjüngenden Oberflächen 8, 11 der Form einer Parabel, hier vorzugsweise einer quadratischen Parabel.

Gemäß der Figur 2c weist der Biegebalken 4 ausgehend von der Einspannstelle 6 zunächst eine konstante Höhe auf, anschließend im Verformungsabschnitt 10 eine abnehmende Höhe und anschließend hinter dem Verformungsbereich 10 bis zum Balkenende 7 wieder eine konstante Höhe. Wie bei den Ausführungsformen gemäß der Figuren 2a und 2b ist die Breite des Biegebalkens im Verformungsabschnitt 10 und insbesondere über der gesamten axialen Länge des Biegebalkens 4 konstant.

Die Verjüngung der Höhe im Verformungsabschnitt 10 gemäß der Figur 2c ist derart ausgeführt, dass die beiden Oberflächen 8, 11 in einer seitlichen Ansicht beziehungsweise in einem Axialschnitt durch die Längsachse 5 in Höhenrichtung eine Kreisbogenform aufweisen. Die Länge des Kreisbogens ist aufgrund des vergleichsweise großen Radius des Kreisbogens vergleichsweise kurz.

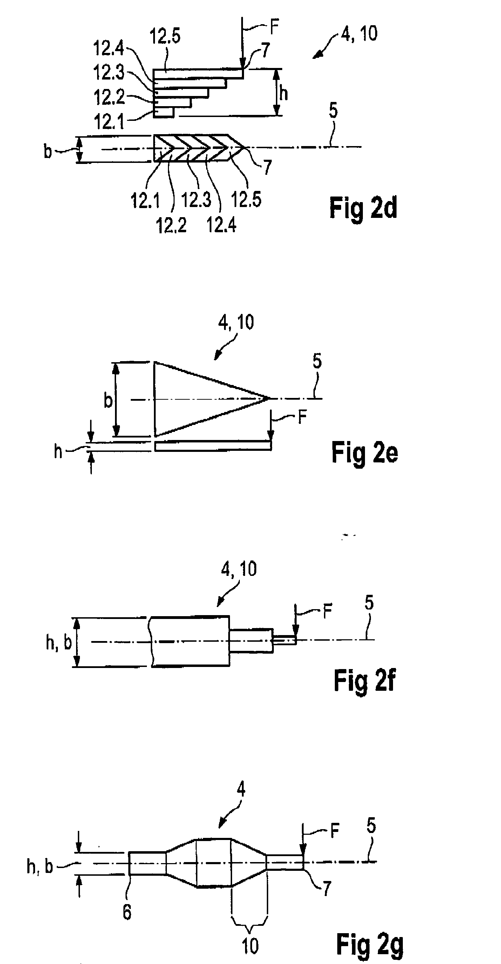

In der Figur 2e ist ein Biegebalken 10 dargestellt, der über seiner gesamten axialen Länge oder zumindest im Verformungsabschnitt 10 eine konstante Höhe, jedoch eine abnehmende Breite aufweist. Die Breitenabnahme wird durch eine lineare Funktion beschrieben, sodass sich die Form eines mehr oder minder spitzen Dreiecks ergibt oder auch eines Axialschnittes durch einen Kegelstumpf. Ein entsprechendes Profil könnte auch für den Verlauf der Höhe bei konstanter Breite gewählt werden oder für die Breite und/oder die Höhe ein einseitig linear verjüngter Verlauf.

Dieselbe Wirkung, welche durch die linear verminderte Breite gemäß der Ausführungsform der Figur 2e erreicht werden kann, kann auch durch die Ausführungsform gemäß der Figur 2d erreicht werden, in welcher mehrere, vorliegend fünf, Blattfedem 12 aufeinandergeschichtet sind. Die unterste Blattfeder 12.1 weist eine konstante Höhe und in einer Draufsicht eine Dreiecksform auf, mit dem spitzen Ende zum Balkenende 7 gewandt. Die zweitunterste Blattfeder 12.2 weist eine konstante Höhe und zunächst im Bereich der Überlappung mit der untersten Blattfeder 12.1 eine konstante Breite auf, wobei sich an letztere dann eine beidseitig linear abnehmende Breite in Form einer Spitze anschließt. Entsprechendes gilt für die Blattfedem 12.3 bis 12.5, welche jeweils im Bereich ihrer Überlappung mit der unmittelbar darunterllegenden Blattfeder eine konstante Breite und eine über die unmittelbar darunterliegende Blattfeder überstehende Spitze mit linearen Begrenzungen in Breitenrichtung aufweisen.

Die Figur 2f zeigt ein Beispiel für eine nicht stetige Verjüngung der Balkenbreite oder Balkenhöhe, zumindest im Verformungsabschnitt 10.

Die Figur 2g zeigt ein Beispiel für einen Biegebalken 4, dessen Breite und/oder Höhe zunächst beginnend an der Einspannstelle 6 konstant ist, anschließend zunimmt, dann wieder konstant bleibt, im anschließenden Verformungsabschnitt 10 erfindungsgemäß abnimmt, woraufhin sich wieder ein konstanter Bereich anschließt.

**Patentansprüche**

1. Kraftaufnehmer

   1.1 mit einem ersten Anschlusspunkt (1) und einem zweiten Anschlusspunkt (2), die über einen elastischen Federkörper (3) miteinander verbunden sind und durch Krafteinleitung an wenigstens einem der beiden Anschlusspunkte (1, 2) bei Verformung des Federkörpers (3) relativ zueinander bewegbar sind; wobei
   1.2 der Federkörper (3) zumindest teilweise durch eine Biegebalken (4) gebildet wird, der entlang seiner Längsachse (5) von einer Einspannstelle (6) zu einem Balkenende (7) verläuft und der sich unter der Krafteinleitung quer zu seiner Längsachse (5) biegt;
   1.3 mit einem an wenigstens einer Oberfläche (8) des Blegebalkens (4) angeschlossenen Sensor (9), welcher die Verformung des Biegebalkens (4) zumindest über einem Verformungsabschnitt (10), der sich in Richtung der Längsachse (5) erstreckt, erfasst; **dadurch gekennzeichnet, dass**
   1.4 die Höhe und/oder die Breite des Biegebalkens (4) in Richtung von der Einspannstelle (6) zu dem Balkenende (7) zumindest über dem Verformungsabschnitt (10) kontinuierlich verjüngt ausgeführt ist, wobei die Höhe in Biegerichtung und die Breite senkrecht oder winklig zur Biegerichtung verläuft.

2. Kraftaufnehmer gemäß Anspruch 1, **dadurch gekennzeichnet, dass** der Biegebalken (4) senkrecht zu seiner Längsachse (5) einen Rechteckquerschnitt aufweist.

3. Kraftaufnehmer gemäß einem der Ansprüche 1 oder 2, **dadurch gekennzeichnet, dass** die Höhe des Biegebalkens (4) von der Einspannstelle (6) bis zu dem Balkenende (7) oder in Richtung von der Einspannstelle (6) zu dem Balkenende (7) über dem Verformungsabschnitt (10) konstant ist und die Breite linear abnimmt, insbesondere gemäß der Formel

$$b_x = b_{max} \cdot l_x / l$$

mit

$b_x$: Breite an der Axialposition x
$b_{max}$: Maximale Breite des Biegebalkens im betreffenden Abschnitt
$l_x$: Abstand vom axialen Ende des betreffenden Abschnittes in Richtung von der Einspannstelle zu dem Balkenende gesehen
l: Axiale Länge des betreffenden Abschnittes.

4. Kraftaufnehmer gemäß einem der Ansprüche 1 oder 2, **dadurch gekennzeichnet, dass** die Breite des Biegebalkens (4) von der Einspannstelle (6) bis zu dem Balkenende (7) oder in Richtung von der Einspannstelle (6) zu dem Balkenende (7) über dem Verformungsabschnitt (10) konstant ist und die Höhe nach einer Parabel, insbesondere quadratischen Parabel abnimmt, vorteilhaft gemäß der Formel

$$h_x = h_{max} \sqrt{(l_x / l)}$$

mit

$h_x$: Höhe an der Axialposition x
$h_{mex}$: Maximale Höhe des Biegebalkens im betreffenden Abschnitt
$l_x$: Abstand vom axialen Ende des betreffenden Abschnittes in Richtung von der Einspannstelle zu dem Balkenende gesehen
l: Axiale Länge des betreffenden Abschnittes.

5. Kraftaufnehmer gemäß einem der Ansprüche 1 oder 2, **dadurch gekennzeichnet, dass** die Breite des Biegebalkens (4) von der Einspannstelle (6) bis zu dem Balkenende (7) oder in Richtung von der Einspannstelle (6) zu dem Balkenende (7) Ober dem Verformungsabschnitt (10) konstant ist und der Biegebalken (4) in einem Axialschnitt senkrecht zur Breite ein Querschnittsprofil aufweist, das durch zwei sich gegenüberstehende Kreisbögen, insbesondere mit identischem Radius, begrenzt wird.

6. Kraftaufnehmer gemäß einem der Ansprüche 1 bis 5, **dadurch gekennzeichnet, dass** eine Oberfläche (8) oder zwei einander entgegengesetzte Oberflächen (8, 11) des Biegebalkens (4), die sich senkrecht oder winklig zur Biegerichtung und insbesondere in Richtung der Breite des Biegebalkens (4) erstreckt/ erstrecken, jeweils einen Sensor (9) trägt/tragen, der die Verformung des Biegebalkens (4) in dieser Oberfläche (8, 11) zumindest über dem gesamten Verformungsabschnitt (10) erfasst.

7. Kraftaufnehmer gemäß einem der Ansprüche 1 bis 6, **dadurch gekennzeichnet, dass** der Sensor (9) einen oder eine Vielzahl von Dehnungsmessstreifen, insbesondere zu einer Wheatstone'schen Brükke zusammengeschaltet, umfasst.

**Fig. 1**

**Fig. 2a**

**Fig. 2b**

**Fig. 2c**

EP 2 402 730 A1

Fig 2d

Fig 2e

Fig 2f

Fig 2g

8

Europäisches
Patentamt

European
Patent Office

Office européen
des brevets

**EUROPÄISCHER RECHERCHENBERICHT**

Nummer der Anmeldung

EP 11 00 5183

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 478 093 A (VALADIER JEAN-CLAUDE [FR]) 23. Oktober 1984 (1984-10-23) * Abbildungen 1-20 * * Spalte 3, Zeile 30 - Spalte 7, Zeile 63 * ----- | 1-4,6,7 | INV. G01L1/22 F16C17/12 |
| X | US 3 327 270 A (FREDRICK GARRISON JUDD) 20. Juni 1967 (1967-06-20) * Spalte 1, Zeilen 9,10 * * Spalte 2, Zeile 32 - Spalte 4, Zeile 31 * * Abbildungen 1-3,5 * ----- | 1-4,6,7 | |
| X | US 6 172 309 B1 (LOCKERY HARRY E [US]) 9. Januar 2001 (2001-01-09) * Abbildungen 3,4 * * Spalte 2, Zeile 41 - Spalte 5, Zeile 25 * ----- | 5 | |

| RECHERCHIERTE SACHGEBIETE (IPC) |
|---|
| G01L G01G F16C |

Der vorliegende Recherchenbericht wurde für alle Patentansprüche erstellt

| Recherchenort | Abschlußdatum der Recherche | Prüfer |
|---|---|---|
| Den Haag | 7. November 2011 | Giesen, Fabian |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.................................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**            EP 11 00 5183

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-11-2011

| Im Recherchenbericht angeführtes Patentdokument | | Datum der Veröffentlichung | Mitglied(er) der Patentfamilie | | Datum der Veröffentlichung |
|---|---|---|---|---|---|
| US 4478093 | A | 23-10-1984 | CA | 1190763 A1 | 23-07-1985 |
| | | | DE | 3363250 D1 | 05-06-1986 |
| | | | EP | 0088688 A1 | 14-09-1983 |
| | | | FR | 2523304 A1 | 16-09-1983 |
| | | | JP | 58189534 A | 05-11-1983 |
| US 3327270 | A | 20-06-1967 | GB | 1061945 A | 15-03-1967 |
| US 6172309 | B1 | 09-01-2001 | AU | 5523201 A | 23-10-2001 |
| | | | DE | 10191531 T5 | 22-04-2004 |
| | | | GB | 2367371 A | 03-04-2002 |
| | | | WO | 0177632 A1 | 18-10-2001 |

EPO FORM P0461

Für nähere Einzelheiten zu diesem Anhang : siehe Amtsblatt des Europäischen Patentamts, Nr.12/82